Europäisches Patentamt

European Patent Office

Office européen des brevets

(11) Veröffentlichungsnummer: **0 405 169 A2**

## (12) EUROPÄISCHE PATENTANMELDUNG

(21) Anmeldenummer: **90110348.1**

(22) Anmeldetag: **31.05.90**

(51) Int. Cl.⁵: **B01D 21/00**

(30) Priorität: **29.06.89 DE 3921277**

(43) Veröffentlichungstag der Anmeldung:
**02.01.91 Patentblatt 91/01**

(84) Benannte Vertragsstaaten:
**AT BE CH DE DK ES FR GB GR IT LI LU NL SE**

(71) Anmelder: **Munters Euroform GmbH**
**Süsterfeldstrasse 65**
**D-5100 Aachen(DE)**

(72) Erfinder: **Schultz, Martin**
**Rue Frepert 58**
**B-4729 Hauset(BE)**

(74) Vertreter: **Döring, Wolfgang, Dr. Ing.**
**Mörikestrasse 18**
**D-4000 Düsseldorf 30(DE)**

(54) **Lamellenklärer.**

(57) Es wird ein Lamellenklärer mit einer Vielzahl von langgestreckten, parallel zueinander verlaufenden und an den Längsrändern jeweils miteinander verbundenen Kanalwänden beschrieben. Die Kanalwände bilden eine Vielzahl von langgestreckten, unmittelbar aneinander angrenzenden, parallel zueinander verlaufenden Strömungskanälen, wobei die Verbindung eines Teils der Kanalwände über entsprechend langgestreckte, als Schiebeverbindungen ausgebildete Nut/Feder-Verbindungen erfolgt. Die Kanalwände sind in wabenartigen Sechsecken angeordnet. Drei der jeweils ein Sechseck bildenden Kanalwände sind einstückig miteinander ausgebildet und bilden ein leistenförmiges Grundelement. Die beiden endseitigen Kanalwandkanten sind jeweils mit einer Nut oder Feder und die beiden inneren Kanalwandkanten jeweils mit dem entgegengesetzten Verbindungselement versehen.

FIG. 1

# LAMELLENKLÄRER

Die vorliegende Erfindung betrifft einen Lamellenklärer mit einer Vielzahl von langgestreckten, parallel zueinander verlaufenden und an den Längsrändern jeweils miteinander verbundenen Kanalwänden, die eine Vielzahl von langgestreckten, unmittelbar aneinander angrenzenden, parallel zueinander verlaufenden Strömungskanälen bilden, wobei die Verbindung eines Teils der Kanalwände über entsprechend langgestreckte, als Schiebeverbindungen ausgebildete Nut/Feder-Verbindungen erfolgt und die Kanalwände in wabenartigen Sechsecken angeordnet sind.

Ein derartiger Lamellenklärer ist aus der DE-OS 34 26 571 bekannt. Bei dem bekannten Lamellenklärer sind jeweils sechs Kanalwände einstückig miteinander ausgebildet, so daß sich sechseckige Grundelemente bilden, die über Nut/Feder-Verbindungen zu einem Lamellenklärer zusammengebaut werden können. Bei den Grundelementen handelt es sich somit hierbei um Hohlprofile. Gegenüber einem einstückig ausgebildeten oder aus einer Vielzahl von parallelen strukturierten Lagen zusammengesetzten Lamellenklärer bietet diese bekannte Ausführungsform den Vorteil, daß der Lamellenklärer je nach Wunsch beliebig groß ausgebildet werden kann, wobei lediglich die Zahl der zu montierenden Grundelemente verändert werden muß. Es bestehen daher große Variationsmöglichkeiten, und die Lagerhaltung wird begünstigt, da nur ein einziges Grundelement bevorratet werden muß. Ein weiterer Vorteil besteht darin, daß auf der Baustelle selbst der Lamellenklärer in einfacher Weise mit individueller Anpassung an den jeweiligen Einsatzzweck zusammengebaut werden kann. Der höhere Montageaufwand wird dabei in Kauf genommen.

Nachteilig ist jedoch bei dieser Ausführungsform noch, daß die Herstellung der Grundelemente aufgrund deren Ausbildung als Hohlprofil relativ kompliziert ist und die Transportmöglichkeiten unvollkommen sind, da ein Ineinanderstapeln der Grundelemente nicht möglich ist.

Der Erfindung liegt die Aufgabe zugrunde, einen Lamellenklärer der angegebenen Art zu schaffen, der bei guter Transportmöglichkeit eine besonders einfache Herstellung gestattet.

Diese Aufgabe wird erfindungsgemäß bei einem Lamellenklärer der eingangs beschriebenen Art dadurch gelöst, daß drei der jeweils ein Sechseck bildenden Kanalwände unter Ausbildung eines leistenförmigen Grundelementes einstückig miteinander ausgebildet sind und daß die beiden endseitigen Kanalwandkanten jeweils mit einer Nut oder Feder und die beiden inneren Kanalwandkanten jeweils mit dem entgegengesetzten Verbindungselement versehen sind.

Bei der erfindungsgemäßen Lösung ist somit das Grundelement nicht als Hohlprofil, sondern als offenes leistenförmiges Profil ausgebildet, was den Vorteil einer besonders einfachen Herstellmöglichkeit und besonders günstigen Transportmöglichkeit besitzt. Derartige Grundelemente werden nämlich mit Hilfe eines Extruders hergestellt, so daß sich hierbei ein einfacheres Werkzeug verwenden läßt.

Die Grundelemente sind ineinander stapelbar, so daß sich ein besonders geringer Raumbedarf bei der Lagerung sowie eine gute Transportmöglichkeit ergibt. Die entsprechenden Lamellenklärer werden je nach Einsatzzweck in der Regel an Ort und Stelle montiert, wobei aufgrund der großen Variationsmöglichkeiten in bezug auf die Größe des Lamellenklärers eine genaue Anpassung an die gewünschten Gegebenheiten möglich ist. Die Montage kann sehr einfach vorgenommen werden, da sämtliche Grundelemente identisch ausgebildet sind.

Ein weiterer Vorteil ist darin zu sehen, daß bei der Demontage von benutzten Lamellenklärern offene Grundelemente anfallen, die eine besonders gute Reinigungsmöglichkeit bieten. Dies ist bei den Hohlprofilen des Standes der Technik schwieriger durchzuführen. Der höhere Montageaufwand als beim Stand der Technik aufgrund der vergrößerten Zahl der Grundelemente wiegt dabei weniger schwer.

Wesentlich ist bei der Erfindung, daß die Auswahl der Nut/Feder-Verbindungen an den vier Kanten des Grundelementes so getroffen ist, daß sich die Grundelemente ohne weiteres zu einem größeren Gebilde aneinandersetzen lassen, ohne daß sich hierbei doppelwandige Strukturen ergeben bzw. komplizierte Montageanleitungen zu beachten sind. Dies wird erfindungsgemäß dadurch erreicht, daß an den beiden endseitigen Kanten des Grundelementes andere Verbindungselemente angeordnet sind als an den beiden inneren Kanten. Beim Zusammensetzen von mehreren Grundelementen zu einem wabenförmigen Gebilde ergibt sich dabei eine einheitliche Wabenstruktur, wobei die beiden Endkanten eines Grundelementes jeweils mit einer Innenkante eines zweiten Grundelementes und einer anderen Innenkante eines dritten Grundelementes verbunden werden. Wenn beispielsweise die Endkanten jeweils mit einer Feder und die beiden inneren Kanten mit einer Nut versehen sind, welche Ausführungsform bevorzugt wird, erfolgt die Montage dadurch, daß die Federn der Endkanten in die Nuten von verschiedenen inneren Kanten von zwei weiteren Grundelementen eingesetzt werden. Bei diesem Aufbau müssen noch nicht einmal Grundelemente umgedreht werden, sondern der Aufbau wird mit gleichsinnig angeordneten Grundelementen vorgenommen, wobei die Grundelemente jeder zweiten Reihe zu den Grundelementen der anderen Reihe seitlich versetzt angeordnet werden.

Erfindungsgemäß lassen sich somit aus einer Vielzahl von Sechsecken bestehende Lamellenklärer zusammenbauen. Hierbei können die Sechsecke so ausgebildet sein, daß sie sechs gleich lange Seiten aufweisen. Es können jedoch auch Ausführungsformen zur Anwendung gelangen, bei denen unregelmäßige Sechsecke zum Einsatz gelangen, beispielsweise solche, bei denen zwei gegenüberliegende Seiten länger oder kürzer ausgebildet sind als die übrigen Sechseckseiten. Bei einer besonders bevorzugten Ausführungsform weisen hierbei die Sechsecke zwei gegenüberliegende kürzere Seiten auf, wobei die drei Kanalwände eines Grundelementes eine kürzere Seite und zwei aneinandergrenzende längere Seiten umfassen. Bei einem solchen Grundelement befindet sich daher die kürzere Seite an einem Ende des Elementes. Bei einer anderen Ausführungsform ist die kürzere Seite mittig zwischen den beiden längeren Seiten angeordnet.

In bezug auf die Anordnung der Verbindungselemente wird bevorzugt, die beiden endseitigen Kanalwandkanten jeweils mit einer Feder und die beiden inneren Kanalwandkanten jeweils mit einer Mut zu versehen. Es versteht sich, daß die Nuten generell so angeordnet und ausgebildet sind, daß sie eine Zugangsmöglichkeit für die Federn aus den jeweiligen für die Montage erforderlichen Richtungen ermöglichen. So besitzt das vorstehend beschriebene bevorzugte Grundelement, bei der sich eine kürzere Seite neben zwei aneinandergrenzenden längeren Seiten befindet, zwischen der kürzeren Seite und der angrenzenden längeren Seite eine Nut, die (bei Vertikalstellung der kürzeren Seite und unterer Lage der beiden längeren Seiten) eine im wesentlichen seitliche Zugangsmöglichkeit für eine Feder bietet, während die Nut zwischen den beiden längeren Seiten eine vertikale Zugangsmöglichkeit vorsieht. Das bedeutet, daß in die letztgenannte Nut die Feder am Ende der kürzeren Seite einsetzbar ist, während in die erstgenannte Nut die Feder am Ende der längeren Seite einführbar ist.

Bei sämtlichen Ausführungsformen der Erfindung wird bevorzugt, die Nuten als im Schnitt etwa kreisförmige Ausnehmungen und die Federn als im Schnitt etwa kreisförmige Verdickungen auszubilden. Diese Ausgestaltung ermöglicht eine sichere Verbindung, wobei auch zum Spielausgleich geringfügige Verdrehungen der Grundelemente untereinander möglich sind. Vorzugsweise besitzen die Nuten in bezug auf die Federn Untermaß, so daß sich zwischen Nut und Feder ein Klemmeffekt ergibt. Hierbei werden die Nuten bzw. Rundführungen bei der Einführung der entsprechenden Federn geringfügig aufgeweitet, wodurch der entsprechende Klemmeffekt entsteht.

Um die Grundelemente des Lamellenklärers in ihrer Materialstärke möglichst gering zu halten, werden die Nuten bzw. Rundführungen vorzugsweise dadurch verwirklicht, daß man das Material an den entsprechenden Stellen $\Omega$-förmig führt, wobei die Material stärke im Bereich des $\Omega$ gegenüber den übrigen Bereichen im wesentlichen nicht verändert wird. Die Federn werden durch einfache, im Schnitt kreisförmige Verdickungen an den beiden Enden der Grundelemente ausgebildet.

Die erfindungsgemäß ausgebildeten Lamellenklärer bzw. deren Grundelemente werden vorzugsweise aus Kunststoff hergestellt, wobei die Grundelemente als stranggepreßte Profile produziert und durch Einschieben der entsprechenden Federn in die entsprechenden Nuten zu einem einheitlichen Lamellenklärer zusammengebaut werden. Einsatzgebiete für derartige Lamellenklärer sind beispielsweise Kläranlagen, Absetzbecken u. dgl.. Es findet dabei überwiegend eine Schwerkraftabscheidung aus Flüssigkeiten statt, die zum Teil durch entsprechende Strömungseffekte unterstützt wird.

Die vorstehend beschriebene Kreisform der Federn und Nuten begünstigt den vorstehend erwähnten Klemmeffekt durch Ausnutzung der diesen Strukturen innewohnenden Elastizität.

Die Erfindung wird nachfolgend anhand eines Ausführungsbeispiels in Verbindung mit der Zeichnung im einzelnen erläutert. Es zeigen:

Figur 1 einen Querschnitt durch ein Grundelement eines Lamellenklärers;

Figur 2 mehrere Grundelemente der Figur 1, die zu einem Teil eines Lamellenklärers montiert sind, im Querschnitt; und

Figur 3 eine perspektivische Ansicht eines fertigen Lamellenklärers, der aus den Grundelementen der Figuren 1 und 2 zusammengebaut worden ist.

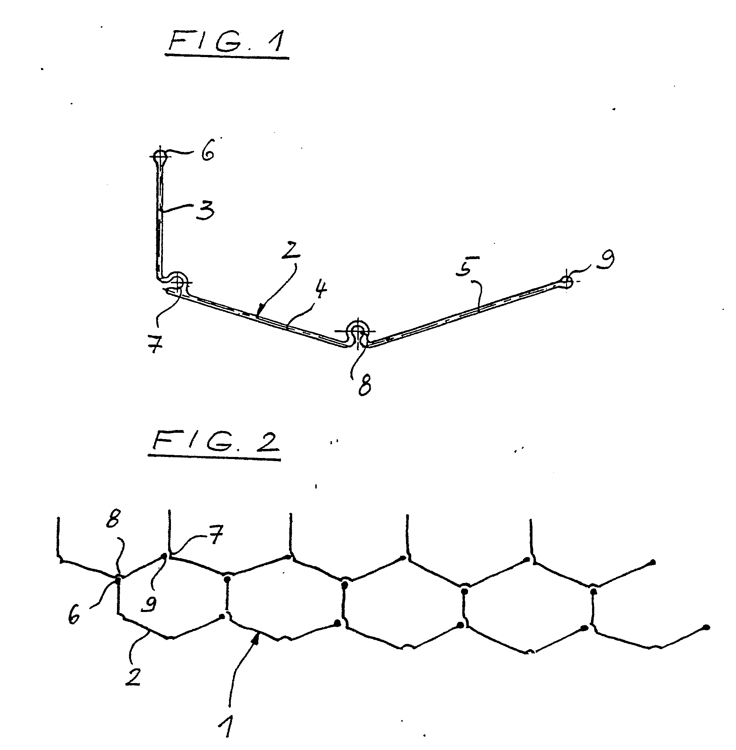

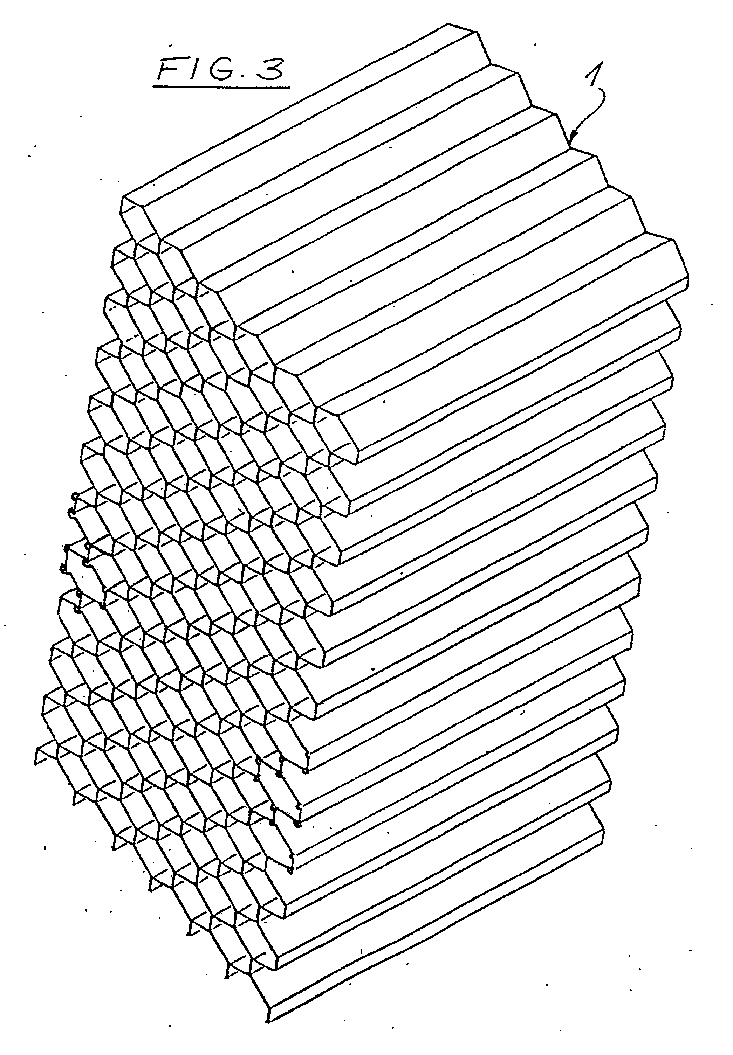

Figur 1 zeigt ein Grundelemente 2, das zur Montage des in Figur 3 dargestellten Lamellenklärers 1 dient. Das Grundelement 2 besitzt drei Wände 3, 4 und, die drei Wände eines Sechsecks bilden. Der Lamellenklärer 1 setzt sich aus einer Vielzahl von derartigen Sechsecken zusammen.

Wie man Figur 1 entnehmen kann, besteht das Grundelement 2 aus einer kurzen Wand 3 und zwei längeren Wänden 4, 5, die im wesentlichen die gleiche Abmessung aufweisen. Die beiden längeren Wände 4, 5 bilden miteinander einen stumpfen Winkel. Auch die kurze Wand 3 bildet mit der benachbarten längeren Wand 4 einen stumpfen Winkel.

Wie aus Figur 2 zu entnehmen ist, kann eine Vielzahl von derartigen Grundelementen 2 zu einem wabenförmigen Gebilde zusammengesetzt werden, das letztendlich den Lamellenklärer 1 formt. Die Verbindung zwischen den einzelnen Grundelementen wird dabei über Nut/Feder-Verbindungen vorgenommen, wie nachfolgend im einzelnen erläutert wird.

Um diese Nut/Feder-Verbindungen zu ermöglichen, weist das Grundelement 2 an seinen beiden endseitigen Kanten je eine Feder 6, 9 auf, bei der es sich im Schnitt um eine kreisförmige Verdikkung handelt. An den beiden inneren Kanalwandkanten ist jeweils eine Nut 7, 8 vorgesehen, die durch eine entsprechende Krümmung der Kanalwände hergestellt worden sind. Durch diese Umbiegungen ergibt sich jeweils eine im Schnitt kreisförmige Nut 7, 8. Die Verbindung zwischen den Grundelementen wird hergestellt, indem die Feder 6 eines anderen Grundelementes in die Nut 8 und die Feder 9 eines dritten Grundelementes in die Nut 7 eingesetzt werden. Hierbei wird durch das Einführen der Feder in die entsprechende Nut das entsprechende Material gespreizt, das dann beim Machfedern, wenn sich die Feder mitten in der Nut befindet, unter Vorspannung verbleibt, so daß eine gute Klemmverbindung erreicht wird.

Die beiden etwa Ω-förmig ausgebildeten Abschnitte des Grundelementes, die die beiden Nuten 7, 8 bilden, weisen jeweils eine Zugangsöffnung auf, deren Richtung sich nach der Lage der einzusetzenden Feder richtet. So ist bei der Darstellung der Figur 1 die entsprechende Zugangsöffnung der Nut 8 nach unten geöffnet, während die Nut 7 eine seitliche Zugangsöffnung aufweist.

Figur 2 zeigt schematisch eine Reihe von zusammengesetzten Grundelementen der Figur 1, während Figur 3 den gesamten Lamellenklärer in perspektivischer Ansicht zeigt.

**Ansprüche**

1. Lamellenklärer mit einer Vielzahl von langgestreckten, parallel zueinander verlaufenden und an den Längsrändern jeweils miteinander verbundenen Kanalwänden, die eine Vielzahl von langgestreckten, unmittelbar aneinander angrenzenden, parallel zueinander verlaufenden Strömungskanälen bilden, wobei die Verbindung eines Teil der Kanalwände über entsprechend langgestreckte, als Schiebeverbindungen ausgebildete Nut/Feder-Verbindungen erfolgt und die Kanalwände in wabenartigen Sechsecken angeordnet sind, dadurch gekennzeichnet, daß drei (3, 4, 5) der jeweils ein Sechseck bildenden Kanalwände unter Ausbildung eines leistenförmigen Grundelementes (2) einstükkig miteinander ausgebildet sind und daß die beiden endseitigen Kanalwandkanten jeweils mit einer Mut oder Feder (6, 9) und die beiden inneren Kanalwandkanten jeweils mit dem entgegengesetzten Verbindungselement versehen sind.

2. Lamellenklärer nach Anspruch 1, dadurch gekennzeichnet, daß die beiden endseitigen Kanalwandkanten jeweils eine Feder (6, 9) und die beiden inneren Kanalwandkanten jeweils eine Nut (7, 8) aufweisen.

# FIG. 1

# FIG. 2

FIG. 3